# EUROPÄISCHE PATENTSCHRIFT

(11) **EP 0 833 141 B1**
(45) Veröffentlichungstag und Bekanntmachung des Hinweises auf die Patenterteilung: **15.01.2003**
(21) Anmeldenummer: 97115684.9
(22) Anmeldetag: 10.09.1997
(51) Int. Cl.: G01N 1/06, B23Q 3/154

(54) **Messerhalter für ein Mikrotom**
Knife holder for microtome
Support de couteau pour microtome

(30) Priorität: 30.09.1996 DE 19640045
(43) Veröffentlichungstag der Anmeldung: 01.04.1998
(60) Teilanmeldung: 02022589.2
(73) Patentinhaber: Microm International GmbH, 69190 Walldorf (DE)
(72) Erfinder: Berleth, Manfred, 69214 Eppelheim (DE); Heid, Hans, 69245 Bammental (DE)
(74) Vertreter: Weber, Walter, Dipl.-Ing.(FH)

(56) Entgegenhaltungen:
- DE-A- 3 540 861
- GB-A- 935 521
- US-A- 3 190 164
- US-A- 3 503 024
- US-A- 3 527 133
- US-A- 5 148 729

## Beschreibung

Bei bekannten Messerhaltern für Mikrotome wird das auswechselbare Messer oder der Klingenhalter für Einweg-Klingen zwischen einem Basisteil des Messerhalters und einer Klemmplatte mechanisch festgeklemmt. Für die Klemmbewegung zwischen dem Basisteil und der Klemmplatte kann dabei eine Exzenterwelle vorgesehen sein, die über einen Hebel betätigt wird. Derartige Messerhalter sind beispielsweise aus der DE-C2 35 40 861 oder aus der US-A 4,700,600 bekannt. Um das Messer oder den Klingenhalter bereits vor der eigentlichen Klemmung lagemäßig zu fixieren, können desweiteren schwache Permanentmagnete vorgesehen sein, die in Ausnehmungen in der Auflagefläche für das Messer bzw. den Klingenhalter eingeklebt sind.

Bei diesen bekannten Messerhaltern erweist sich die Klemmplatte bei der Abnahme der Schnitte häufig als störend, da die Rückenfläche des Messers für ein Auflegen eines Präparatträgers für die Schnittabnahme nicht frei zugänglich ist. Außerdem ist der Ein- und Ausbau des Messers umständlich, da das Messer entweder von der Seite oder von oben in den verbleibenden Schlitz zwischen dem Basisteil und der Klemmplatte hineingeschoben werden muß.

Desweiteren weisen Messerhalter üblicherweise einen sogenannten Fingerschutz auf. Ein solcher Fingerschutz kann dabei aus einem am Grundkörper des Messerhalters schwenkbar angelenkten U-förmigen Hebel bestehen, dessen die beiden U-Schenkel verbindendes Teil sich in einer Endlage über die Klinge des Messers erstreckt und dadurch ein unbeabsichtigtes Aufgreifen auf die Messerschneide verhindert.

Ziel der vorliegenden Erfindung ist ein Messerhalter für Mikrotome, bei dem der Bedienkomfort gegenüber bekannten Messerhaltern verbessert ist.

Dieses Ziel wird erfindungsgemäß durch einen Messerhalter mit den Merkmalen des Anspruches 1 gelöst. Vorteilhafte Ausgestaltungen der Erfindung ergeben sich aus den Merkmalen der abhängigen Ansprüche.

Bei einer Ausführungsform des erfindungsgemäßen Messerhalters erstreckt sich der Betätigungshebel für die Arretierung des Messers bzw. des Klingenhalters in der Position, in der eine Arretierung des Messers bzw. des Klingenhalters bewirkt wird, mindestens teilweise über die Schneide des Messers bzw. der Klinge und umgibt dabei die Schneide. Der zur Arretierung des Messers zu bedienende Betätigungshebel wirkt dadurch gleichzeitig als Fingerschutz, so daß bei arretiertem Messer oder Klingenhalter mindestens ein Teil der Messerschneide gegen einen unbeabsichtigten Aufgriff geschützt ist. Nach einem Messerwechsel oder einer Änderung der benutzten Messerstelle ist dadurch mit äußerst einfachen Mitteln stets ein Teil der Messerklinge abgedeckt, ohne daß ein zusätzliches Betätigungselement zu bedienen ist.

Bei einer vorteilhaften Ausführungsform der Erfindung erfolgt die Arretierung des Messers bzw. des Klingenträgers durch Magnete, die im Basisteil des Messerträgers eingelassen sind und bei Betätigung eines Betätigungshebels derart bewegt werden, daß die Magnetkraft in einer Stellung des Betätigungshebels das Messer bzw. den Klingenhalter zuverlässig am Messerträger festhält und in einer anderen Stellung des Hebels das Messer bzw. den Klingenträger soweit freigibt, daß eine leichte Verschiebbarkeit des Messers gewährleistet ist. Der oder die Magnete können dazu in einer zur Auflagefläche für das Messer senkrechten Richtung beweglich im Basisteil aufgenommen sein. Für die Übertragung der Bewegung des Betätigungshebels in die lineare Bewegung des oder der Magnete kann eine Exzenterwelle vorgesehen sein, die im Grundkörper des Messerhalters drehbar gelagert ist und sich durch Langlöcher in den Magneten bzw. in den Trägern für die Magnete hindurch erstreckt. An den zu den Langlöchern korrespondierenden Stellen sind dann die Exzenter der Exzenterwelle vorgesehen.

Das Halten des Messers oder des Klingenhalters mittels Magnetkraft am Messerträger liefert gegenüber der sonst üblichen mechanischen Klemmung den Vorteil, daß keine zusätzlichen Klemmplatten erforderlich sind. Die Rückseite des Messers oder Klingenhalters ist dadurch für eine Schnittabnahme frei zugänglich. Der Ein- und Ausbau des Messers oder eines Klingenhalters kann einfach von oben erfolgen, indem dieses/dieser nur flach auf das Basisteil aufgelegt wird; ein Hineinschieben in einen Spalt ist nicht erforderlich. Außerdem liefert der klemmplattenfreie Messerträger eine größere Freiheit bei der Konstruktion und bei dem Einsatz von Klingenhaltern, da die Dicke der Klingenhalter nicht auf die üblichen Messerdicken abgestimmt zu sein braucht. Schließlich entfällt bei einem Wechsel zwischen Messern unterschiedlicher Dicke oder Keilwinkel auch das sonst häufig erforderliche Auswechseln der Klemmplatte, deren Formgebung an Dicke und Keilwinkel des eingesetzten Messers oder Klingenhalters anzupassen ist.

Bei einem weiterhin vorteilhaften Ausführungsbeispiel der Erfindung sind zwei voneinander unabhängig bewegbare Betätigungshebel an den beiden gegenüberliegenden Stirnseiten des Messerträgers vorgesehen. Es ist dann sowohl der linke Randbereich des Messers als auch der rechte Randbereich des Messers gegen einen unbeabsichtigten Aufgriff auf die Messerschneide geschützt. Ungeschützt verbleibt lediglich der zentrale Bereich des Messers, der beim Betrieb des Mikrotoms für die Schnitterzeugung genutzt wird. Der freiliegende Bereich der Messerschneide ist dadurch bei arretiertem Messer unabhängig von der Messerlänge stets gleich groß. Auch der Einsatz längerer Messer führt daher zu keiner Erhöhung des Verletzungsrisikos gegenüber dem Einsatz kürzerer Messer.

Die beiden sich über die Messer- oder Klingenschneide erstreckenden Betätigungshebel können dabei unabhängig voneinander gelagert sein und bewegungsmäßig mit unterschiedlichen Magneten gekoppelt sein. Insbesondere können auch zwei oder mehr Magnete mit der Bewegung eines jeden der beiden Hebel gekoppelt sein, so daß auch Messer unterschiedlicher Länge sicher am Messerträger gehalten werden.

Nachfolgend werden Einzelheiten der Erfindung anhand des in den Figuren dargestellten Ausführungsbeispiels näher erläutert. Im einzelnen zeigen:
- Figur 1: eine Aufsicht auf einen erfindungsgemäßen Messerträger mit daran aufgenommenem Schneidmesser in teilweisem Aufriß;
- Figur 2: einen Schnitt durch den Messerträger in Figur 1 gemäß Schnittlinie II-II.
- Figur 3: einen Schnitt durch einen Betätigungshebel des Messerträgers nach Figur 1.

Der erfindungsgemäße Messerträger erhält ein Basisteil (1), dessen zylindrische Rückenfläche in bekannter Weise verschwenkbar an einem am Mikrotom befestigten Aufnahmeteil (2) aufgenommen ist. Durch Verschwenkung des Basisteils (1) entlang der zylindrischen Rückenfläche ist der sogenannte Anstellwinkel des Messers, also die Orientierung der Messerschneide (29) relativ zu der zu schneidenden Probe, variierbar. Zum Festhalten einer eingestellten Stellung zwischen dem Basisteil (1) und dem Aufnahmeteil (2) ist eine bekannte Exzenterklemmung mittels einer Exzenterwelle (3a, 3b) und eines Bedienhebels (4a, 4b) vorgesehen.

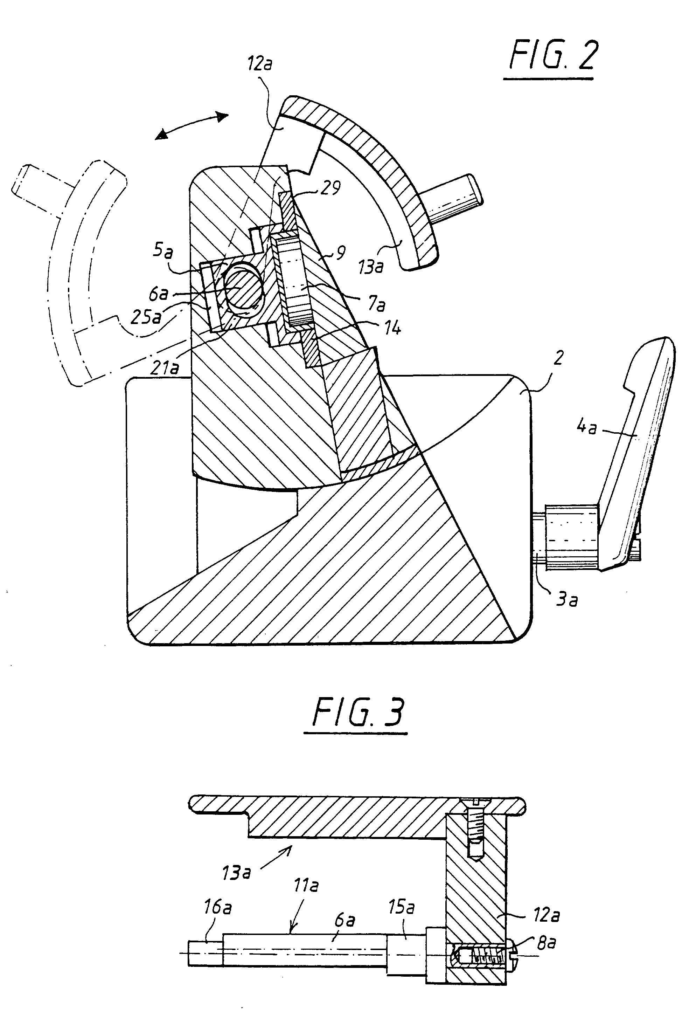

Das Basisteil (1) weist auf der Oberseite mehrere Ausfräsungen (25a, 25b) auf, in die Aufnahmekörper (5a, 5b) für starke Permanentmagnete (7a-7d) hineingesteckt sind. Die Aufnahmekörper (5a, 5b) weisen jeweils ein Langloch (21a, 21b) in Längsrichtung des Basisteils (1), d.h. parallel zur Schneide (29) des aufzunehmenden Messers (9) auf. Auf jeder Seite des Basisteils (1) sind je zwei koaxiale Bohrungen (10b, 17b) vorgesehen, in denen jeweils die Abschnitte (15a, 16a bzw. 15b, 16b) der Exzenterwellen (11a, 11b) gelagert sind (siehe auch Figur 3). Die exzentrisch zu den Abschnitten (15a, 16a bzw. 15b, 16b) angeordneten Exzenter (6a, 6b) der Exzenterwellen (11a,11b) dienen zur Bewegung der Aufnahmekörper (5a, 5b) und damit zur Bewegung der Magnete (7a-7d), um das Messer (9) in der eingestellten Position zu fixieren bzw. freizugeben. Die Betätigung der Exzenterwellen (11a, 11b) erfolgt dabei mittels zweier Betätigungshebel (12a, 12b) an den beiden Stirnseiten des Basisteils (1), die mit den Exzenterwellen (11a, 11b) verbunden sind. Die beiden Betätigungshebel (12a, 12b) weisen jeweils eine sich in Längsrichtung des Basisteils (1) erstreckende Verlängerung (13a, 13b) auf, die als Segment einer Zylinderschale ausgebildet ist. Die Betätigungshebel einschließlich der Verlängerungen weisen dadurch einen L-förmigen Querschnitt auf. Der eine Betätigungshebel (12a) dient dabei zur Bewegung zweier Permanentmagnete (7a, 7b) auf der einen Seite des Basisteils (1) und der zweite Betätigungshebel (12b) zur Bewegung der beiden auf der anderen Seite des Basisteils (1) angeordneten Permanentmagnete (7c, 7d).

Wie insbesondere aus der Figur 2 ersichtlich, ist die Oberseite des Basisteils (1) teilweise von einer Platte (14) aus nichtferromagnetischem Material, z.B. Messing, abgedeckt, die an den zu den Permanentmagneten (7a-7d) korrespondierenden Positionen Löcher aufweist und deren Oberfläche mit der Oberfläche der Permanentmagnete fluchtet. Diese Platte (14) dient als Auflagefläche für das Messer (9). Da die Permanentmagnete (7a-7d) einen geringeren Durchmesser als die Aufnahmekörper (5a, 5b) für die Permanentmagnete aufweisen, dient die Abdeckplatte (14) gleichzeitig zum Halten der Permanentmagnete (7a-7d) und der zugehörigen Aufnahmekörper (5a, 5b) innerhalb der Ausfräsungen des Basisteils (1).

In der in der Figur 2 gestrichelt angedeuteten Stellung des Betätigungshebels (12a) werden durch die Exzenterwelle (11a) die beiden Permanentmagnete (7a, 7b) gemeinsam mit ihrem Aufnahmekörper (5a) um ca. 1 bis 2 Millimeter in das Innere des Basisteils (1) verschoben. Dadurch entsteht ein Luftspalt zwischen den Permanentmagneten (7a, 7b) und dem Messer (9), wodurch wiederum die von den Permanentmagneten (7a, 7b) auf das Messer (9) ausgeübte Magnetkraft stark abnimmt. Dasselbe gilt für die Permanentmagnete (7c, 7d) bei entsprechender Schwenkstellung des zweiten Betätigungshebels (12b, 13b). In diesem Fall ist dadurch das Messer (9) leicht auf der Platte (14) verschiebbar; gleichzeitig verbleibt jedoch noch eine magnetische Restkraft, durch die das Messer (9) mit geringer Kraft gehalten und ein Herabfallen des Messers verhindert wird. Bei Verschwenkung der Betätigungshebel (12a, 13a) in die in der Figur 2 durchgezogen dargestellten Stellung werden die Magnete (7a, 7b) unmittelbar bis an die Basisfläche des Messers (9) herangeführt. Durch die dann wesentlich stärkere Magnetkraft zwischen den Permanentmagneten (7a, 7b) und dem Messer (9) wird das Messer (9) dann fest an der Platte (14) des Messerträgers gehalten und ist in seiner Position relativ zur durch die Abdeckplatten (14a, 14b) gebildete Auflagefläche fixiert. In dieser zweiten Schwenkstellung des Betätigungshebels (12a, 13a) erstreckt sich die als Segment einer Zylinderschale ausgebildete Verlängerung (13a) des Hebels (12a) über die Randbereiche des Schneidmessers (9) entlang der Messerschneide (29) und deckt die die Schneide (29) aufweisenden Teile des Messers in diesen Randbereichen ab.. Dadurch ist die Messerschneide (29) in diesen Randbereichen gegen einen unbeabsichtigten Aufgriff geschützt.

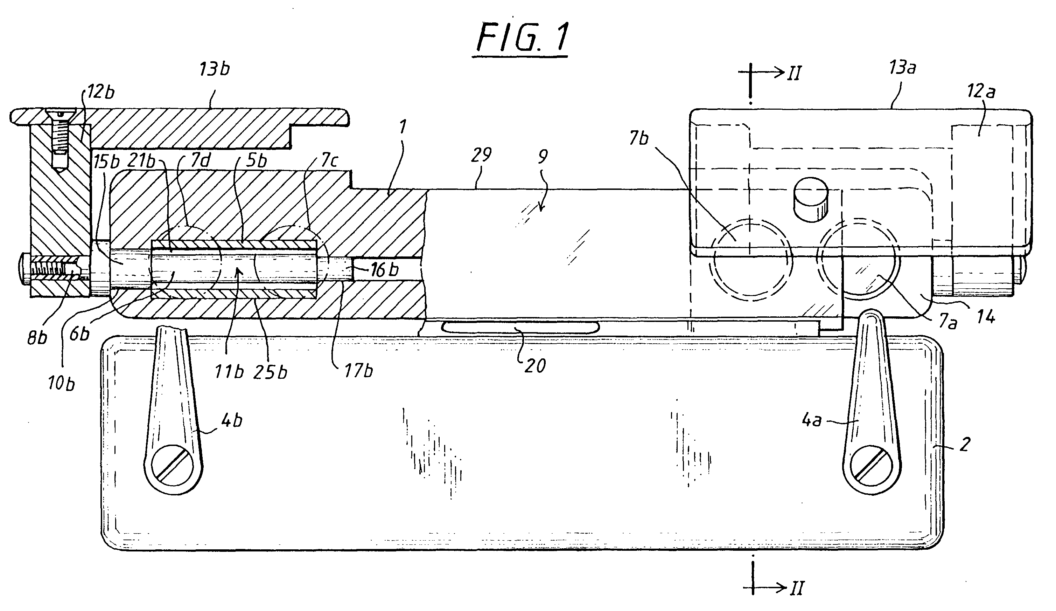

Wie in der Figur 1 dargestellt, sind auf jeder Längsseite des Basisteils (1) zwei Permanentmagnete (7a, 7b) bzw. (7c, 7d) vorgesehen. Jeder dieser Permanentmagnete (7a-7d) ist bezüglich seiner Magnetkraft so ausgelegt, daß die von jeweils zwei Permanentmagneten auf das Messer (9) ausgeübte Kraft zum Halten des Messers (9) in der jeweiligen Position auch beim Schneiden des Präparates ausreicht. Deshalb kann das Messer (9), dessen Länge kürzer als die Länge des Basisteils (1) ist, in den unterschiedlichsten Positionen am Messerträger arretiert werden, so daß unterschiedliche Bereiche des Messers (9) zum Schneiden genutzt werden können. Ist die Schneidkante (29) des Messers (9) in einem Bereich abgestumpft, so braucht lediglich die Arretierung gelöst zu werden und das Messer parallel zur Schneidkante (29) verschoben und wieder arretiert zu werden.

Bei dem in der Figur 2 dargestellten Ausführungsbeispiel weist das Basisteil (1) im hinteren Bereich, also in dem Bereich, in dem das Basisteil (1) am Aufnahmeteil (2) aufgenommen ist, eine Öffnung (20) auf, die zum Absaugen von Schnittabfällen dient. Diese Öffnung (20) korrespondiert zu einer weiteren, hier nicht näher gezeigten Bohrung durch das Aufnahmeteil (2), deren Durchmesser so ausgelegt ist, daß auch in den unterschiedlichen Schwenkstellungen des Basisteils (1) relativ zum Aufnahmeteil (2) eine Verbindung zur Öffnung (20) gewährleistet ist. Die nicht gezeigte Bohrung ist in bekannter Weise an eine Absaugpumpe und einen Auffangbehälter für die Schnittabfälle angeschlossen.

Der erfindungsgemäße Messerhalter kann sowohl zur Aufnahme relativ dicker und nachschärfbarer Mikrotom-Messer, die üblicherweise aus magnetischem Material bestehen, als auch zur Aufnahme von Einwegklingen dienen. Bei Verwendung von Einwegklingen, die üblicherweise sehr dünn sind und selbst keine hinreichende Stabilität aufweisen, sind diese in einen Klingenhalter aus magnetischem Material aufzunehmen und es wird dann der Klingenhalter mit der darin aufgenommenen Einwegklinge durch die Magnetkraft der Permanentmagnete (7a-7d) am Messerhalter fixiert.

Um beim Stillstand eines Mikrotoms mit einem erfindungsgemäßen Messerhalter auch einen Fingerschutz im mittleren Bereich der Messerschneide zu gewährleisten, ist zusätzlich ein in den Figuren nicht dargestellter, über den mittleren Teil der Schneide klappbarer Bügel am Basisteil oder an einem am Basisteil aufgenommenen Schnittstrecker vorgesehen. Das Vor- und Zurückschwenken diese Bügels erfordert jedoch einen zusätzlichen Bedienungsschritt.

Bei dem anhand der Figuren dargestellten Ausführungsbeispiel sind zwei Exzenterwellen (11a, 11b) vorgesehen, so daß die Bewegung und das damit verbundene "Ein- und Ausschalten" der Permanentmagnete (7a, 7b) und der beiden anderen Permanentmagnete (7c, 7d) unabhängig voneinander erfolgt. Alternativ könnte auch eine einzige durch das Basisteil hindurchgeführte Exzenterwelle vorgesehen sein, so daß die Bewegung der beiden die Schneidkante (29) abdeckenden Betätigungshebel (12a, 13a und 12b, 13b) miteinander gekoppelt ist. Die Bewegung beider Betätigungshebel (12a, 13a und 12b, 13b) erfolgt dann jeweils simultan und ebenfalls simultan werden sämtliche Permanentmagnete (7a-7d) vor- bzw. zurückbewegt.

Bei dem beschrieben Ausführungsbeispiel sind die sich über die Messerschneide erstreckenden Verlängerungen (13a, 13b) als Zylindermantelsegmente ausgebildet. Alternativ kommen auch anders geformte Verlängerungen in Betracht, z.B. gebogenen oder abgewinkelte Bleche. Außerdem können an den Verlängerungen auch noch Griffe zur Betätigung der Hebel vorgesehen sein.

## Patentansprüche

1. Messerhalter für ein Mikrotom mit mindestens einem Betätigungshebel (12a, 12b) dessen Betätigung eine Arretierung eines vom Messerhalter aufzunehmenden Messers (9) oder Klingenhalters am Messerhalter bewirkt, **dadurch gekennzeichnet, daß** der Betätigungshebel (12a, 12b) eine Verlängerung (13a, 13b) aufweist, die sich in der eine Arretierung bewirkenden Position mindestens teilweise über die Schneide (29) des Messers (9) bzw. der Klinge erstreckt.

2. Messerhalter nach Anspruch 1, wobei im Basisteil (1) des Messerhalters ein oder mehrere Magnete (7a-7d) zur Arretierung des Messers (9) vorgesehen sind und eine Bewegung des Betätigungshebels (12a, 12b) eine Bewegung der Magnete (7a-7d) bewirkt.

3. Messerhalter nach Anspruch 2, wobei der Magnet oder die Magnete in einer Richtung senkrecht zur Auflagefläche für das Schneidmesser (9) beweglich im Basisteil (1) gelagert sind.

4. Messerhalter nach Anspruch 3, wobei die bewegungsmäßige Kopplung zwischen der Schwenkbewegung des Betätigungshebels (12a, 12b) und der Bewegung des Magneten bzw. der Magnete (7a-7d) mittels Exzenterwellen (11a, 11b) erfolgt.

5. Messerhalter nach Anspruch 4, wobei die Exzenterwelle durch ein Langloch (21a, 21b) durch die Magnete oder durch Tragkörper (5a, 5b) für die Magnete (7a-7d) geführt ist.

6. Messerhalter nach einem der Ansprüche 1-5, wobei zwei unabhängig von einander verschwenkbare Betätigungshebel (12a, 12b) vorgesehen sind.

7. Messerhalter nach Anspruch 6, wobei ein erster Betätigungshebel (12a) bewegungsmäßig mit zwei Magneten (7a, 7b) und ein zweiter Betätigungshebel (12b) bewegungsmäßig mit zwei weiteren Magneten (7c, 7d) gekoppelt ist.

8. Messerhalter nach einem der Ansprüche 1-7, wobei das sich parallel zur Schneide (29) des Messers (9) bzw. der Klinge erstreckende Hebelteil (13a, 13b) als Segment einer Zylinderschale ausgebildet ist.

9. Messerhalter nach einem der Ansprüche 1-7, wobei das sich parallel zur Schneide (29) des Messers (9) bzw. der Klinge erstreckende Hebelteil (13a, 13b) bei eingelegtem Messer (9) oder Klingenhalter für die Arretierung des Messers (9) oder des Klingenhalters über die Schneide (29) bewegt wird und diese abdeckt.

## Claims

1. Knife holder for a microtome with at least one actuating lever (12a, 12b), actuation of which effects the fastening of a knife (9) to be held by the said knife holder or blade holder on the knife holder, **characterized by** that said actuating lever (12a, 12b) includes an extension (13a, 13b), which, in the position effecting a fastening, extends at least partially over the cutting edge (29) of said knife (9) or said blade, as the case may be.

2. The knife holder according to Claim 1, **characterized by** that one or more magnets (7a-7d) are provided in the base portion (1) of said knife holder to fasten the knife (9) and that a movement of the actuating lever (12a, 12b) results in a movement of the magnets (7a-7d).

3. The knife holder according to Claim 2, **characterized by** that the magnet(s) is/are mounted movable in one direction at right angles to a seating surface for the knife (9) in the base portion (1).

4. The knife holder according to Claim 3, **characterized by** that the motion-coupling between the pivoting movement of the actuating lever (12a, 12b) and the movement of the magnet(s) (7a-7d) is done by means of eccentric shafts (11a, 11b).

5. The knife holder according to Claim 4, **characterized by** that the eccentric shaft is guided through the magnets or supporting members (5a, 5b) for the magnets (7a-7d) through a slotted hole (21a, 21b).

6. The knife holder according to one of Claims 1-5, **characterized by** that two actuating levers (12a, 12b), pivotable independently of one another, are provided.

7. The knife holder according to Claim 6, **characterized by** that a first actuating lever (12a) is motion-coupled to two magnets (7a, 7b) and a second actuation lever (12b) is motion-coupled to two additional magnets (7c, 7d).

8. The knife holder according to one of Claims 1-7, **characterized by** that the lever part (13a, 13b) extending parallel to the cutting edge (29) of the knife (9) or the blade, as the case may be, is designed as a segment of a cylindrical shell.

9. The knife holder according to one of Claims 1-7, **characterized by** that the lever part (13a, 13b) extending parallel to the cutting edge (29) of the knife (9) or the blade, as the case may be, is moved across the cutting edge (29) when the knife (9) or the blade holder for fastening of the knife (9) or of the blade holder has been inserted and covers the latter.

## Revendications

1. Porte-lames pour un microtome avec au moins un levier d'actionnement (12a, 12b) dont l'actionnement provoque un blocage d'une lame (9) à loger sur le porte-lame, **caractérisé en ce que** le levier d'actionnement (12a, 12b) présente un prolongement (13a, 13b) qui s'étend dans une position provoquant le blocage au moins partiellement au-delà du tranchant (29) de la lame (9) respectivement du couteau.

2. Porte-lames selon la revendication 1, où dans la partie de base (1) du porte-lames il est prévu un ou plusieurs aimants (7a-7d) pour le blocage de la lame (9) et un mouvement du levier d'actionnement (12a, 12b) provoque un mouvement des aimants (7a-7d).

3. Porte-lames selon la revendication 2, où l'aimant ou les aimants sont logés dans une direction perpendiculaire à la surface d'application pour la lame de coupe (9) de manière mobile dans la partie de base (1).

4. Porte-lames selon la revendication 3, où l'accouplement mobile entre le mouvement de pivotement du levier d'actionnement (12a, 12b) et le mouvement de l'aimant respectivement des aimants (7a-7d) s'effectue au moyen d'arbres à excentriques (11a, 11b).

5. Porte-lames selon la revendication 4, où l'arbre à excentrique est guidé à travers une lumière (21a, 21b), à travers les aimants ou à travers des corps supports (5a, 5b) pour les aimants (7a-7d).

6. Porte-lames selon l'une des revendications 1-5, où il est prévu deux leviers d'actionnements pivotants indépendamment les uns des autres (12a, 12b).

7. Porte-lames selon la revendication 6, où un premier levier d'actionnement (12a) est accouplé en mouvement avec deux aimants (7a, 7b) et un second levier d'actionnement (12b) est accouplé en mouvement avec deux autres aimants (7c, 7d).

8. Porte-lames selon l'une des revendications 1-7, où la partie levier (13a, 13b) s'étendant parallèlement au tranchant (29) du couteau respectivement de la lame (9) est réalisée comme un segment d'une coque cylindrique.

9. Porte-lames selon l'une des revendications 1-7, où la partie levier (13a, 13b) s'étendant parallèlement au tranchant (29) du couteau respectivement de la lame (9) est déplacée au dessus du tranchant (29) et le recouvre au moment de l'introduction de la lame (9) ou du porte-lames pour le blocage de la lame (9) ou du porte-lames.
